# EUROPEAN PATENT APPLICATION

(11) **EP 1 180 885 A1**
(43) Date of publication of application: **20.02.2002**
(21) Application number: 00117721.1
(22) Date of filing: 17.08.2000
(51) Int. Cl.: H04L 29/06, G06F 17/30

(54) **User access system using proxies for accessing a network**

(71) Applicant: SUN MICROSYSTEMS, INC., Palo Alto, California 94303 (US)
(72) Inventor: Heilig, Jörg, 22145 Hamburg (DE); Hütsch, Matthias, 22111 Hamburg (DE)
(74) Representative: HOFFMANN - EITLE

(57) **Abstract**

Access system and method for enabling access to a local area network (14) from a client (12), e.g. through a publicly accessible network (18). A connection between the client (12) and a network server (151,152,153) is established not directly but through a client proxy means (11) located at the client (12) and a proxy server (13) at the local area network (14). The connection between the client proxy means (11) at the client (12) and a proxy server (13) at the local area network (14) may be established through a firewall restricting access to the local area network (14) and/or client (12). In establishing the connection, ports of the client proxy means (11) at the client side may be mapped in multiple steps to the ports of network servers (151,152,153) of the local area network (14). The invention allows to execute services as for example ftp, http, IMAP and similar at the client side for accessing data or services at the local area network side.

## Description

### FIELD OF THE INVENTION

The present invention relates to an access system and a method for enabling a user to access a local area network, e.g. using a public network.

### BACKGROUND OF THE INVENTION

Today's public and private communication networks are increasingly used for applications involving data transmissions over networks of data processing devices. For example, growing numbers of financial transactions or access sessions to review, retrieve or manipulate data are executed over public networks and it is of high importance to prevent access to personal data by unauthorized parties and to provide a secure data transmission link for executing these transactions. However, at the same time it is desirable that an authorized user may conveniently access the service.

If a secure transmission line between a client and a local area network is available, convenient user access is established relatively easy. However, in case a local area network is accessible from a remote host for example via a public network like the Internet, avoiding unauthorized access from the public network to the local area network generally requires complex security measures which may make it difficult for a user to obtain convenient access to services available at the local area network.

### SUMMARY OF THE INVENTION

It is therefore desirable to provide an access system and corresponding method for enabling improved access from a client to a local area network.

An access system for enabling a user to access a local area network may comprise client proxy means adapted to exchange data with a client data processing device and with at least one network server of the local area network through a proxy server. Further, the access system may comprise connection means for establishing a data transmission link between the client proxy means and the proxy server, selecting at least one of the network servers based on the request, and for establishing a communication link between the client proxy means and the network server involving the data transmission link.

According thereto, the client data processing device may not directly access a desired one of network servers at a local area network, but instead transmits the request to client proxy means for further execution. The connection means may select a network server for serving the request and a data transmission link may be established between the client proxy means and a proxy server and further, a communication link between the client proxy means and the network server may be established via the data transmission link, thus allowing the network server to serve the request.

Further, the network server may be selected based on a port at the client proxy means receiving the request and/or by information included into the request and the communication link between the client proxy means and the network server may include a port of the client proxy means and a port of the network server.

The connection means may be arranged to generate a list of assignments between at least one port of the client proxy means and at least one port of the at least one network server and may be arranged for retrieving corresponding mapping rules, the mapping rules at least including information on establishing the data transmission link between the client proxy means and the proxy server. The mapping rules may further include address information of the at least one network server of the local area network.

The connection means may comprise first sub-connection means for mapping at least one port of the proxy server to at least one port of the client proxy means; second sub-connection means for mapping at least one port of the at least one network server to at least one port of the proxy server; and wherein the mapping is in accordance with the retrieved mapping rules.

The data transmission link between the proxy server and the client proxy means may involve a secure communication via a public network and an authorization procedure for authorizing, may be executed at the client data processing device, e.g. by a user at the client data processing device. The data transmission session with the client proxy means may be established through a firewall restricting access to the local area network from the outside.

The connection means may comprise means for mapping a port of the client proxy means to a port of the firewall and means for mapping the port of the fire wall to a port of the proxy server.

The client data processing device may be part of a client network and the data transmission link between the client proxy means and the proxy server is further established through a firewall restricting access to the client network from the outside.

The proxy server may be located inside a firewall restricting access to the local area network from the outside and may be configured to allow access only to selected network servers.

The client proxy means may be registered as a proxy at the client data processing device for executing an application that is proxy enabled, i.e. allows registering a proxy. Further, at the client data processing device the name of a network server may be replaced by the name of the client proxy means and a specific port for an application that is not proxy enabled.

An access method for enabling a user to access a local area network may include receiving a request from a client data processing device at a client proxy means, establishing a data transmission link between the client proxy means and a proxy server, determining one of the at least one network servers based on the request, establishing a communication link between the client proxy means and the network server involving the data transmission link, and authorizing the network server to serve the request.

Further advantageous embodiments of the invention are disclosed in the claims.

### BRIEF DESCRIPTION OF THE DRAWINGS

- Fig. 1: shows a block diagram illustrating elements of the system for enabling access to a local area network according to an embodiment of the invention;
- Fig. 2: shows a flow diagram illustrating steps of the method according to another embodiment of the invention.
- Fig. 3: shows a block diagram illustrating elements of the system for enabling access to a local area network according to an embodiment of the invention;
- Fig. 4: shows a flow diagram illustrating steps of the method according to another embodiment of the invention.
- Fig. 5: shows a flow diagram of a time sequence of transmissions according to another embodiment of the invention;
- Fig. 6: shows a flow diagram of a time sequence of transmissions according to another embodiment of the invention;

- Fig. 7: shows a block diagram illustrating elements of the system for enabling access to a local area network according to an embodiment of the invention;
- Fig. 8: shows a block diagram illustrating elements of the system for enabling access to a local area network according to an embodiment of the invention involving access through a firewall;
- Fig. 9: shows a block diagram illustrating elements of the system for enabling access to a local area network according to an embodiment of the invention involving access through a firewall;
- Fig. 10: shows a block diagram illustrating elements of the system for enabling access to a local area network according to an embodiment of the invention including a client side network;
- Fig. 11: shows a flow diagram of a time sequence of transmissions according to another embodiment of the invention;

### DETAILED DESCRIPTION OF THE PREFERRED EMBODIMENTS

In the figures corresponding elements are denoted by corresponding reference numerals.

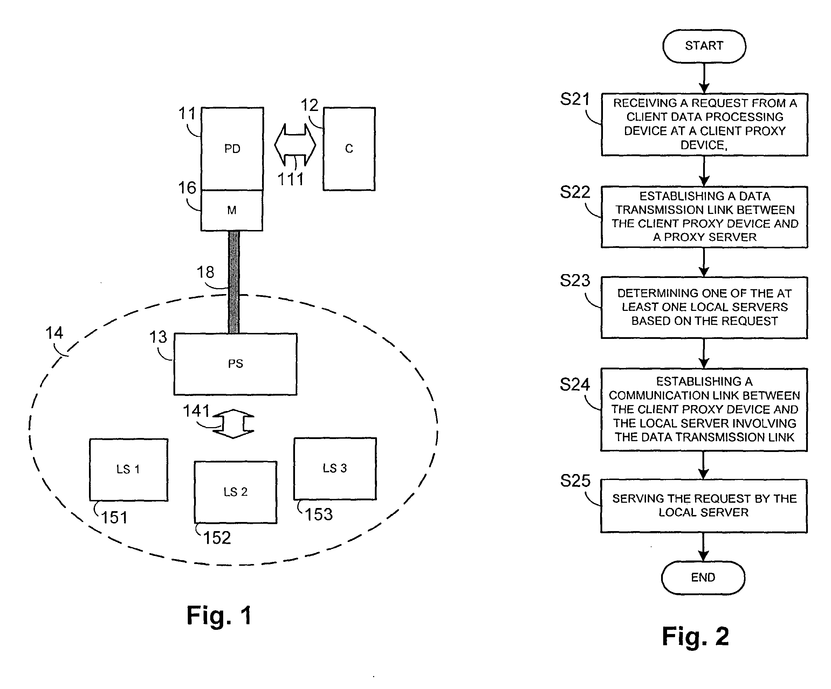

In the following an embodiment of the invention will be described with respect to Fig. 1. Fig. 1 shows a block diagram of an access system for enabling access to a local area network according to an embodiment of the invention.

Fig. 1 illustrates elements of an access system including a client proxy means 11 for exchanging data with a client data processing device 12 via a connection 111. Further, Fig. 1 shows connection means 16 for connecting the client proxy means 11 and a proxy server 13 via a data transmission link 18. Still further, Fig. 1 shows as three exemplary network servers 151, 152 and 153 connected to the proxy server 13, e.g. via a communication network such as a local area network 14, as illustrated by an arrow 141.

The access system of the shown embodiment provides, e.g. a user operating the client data processing device 12, improved access to information on the network servers 151, 152 and 153 through the client proxy means 11 and the proxy server 13, e.g. for requesting services from the network servers such as obtaining data files, starting applications and similar.

In the embodiment illustrated in Fig. 1, the client data processing device 12 does not directly access a desired one of the network servers, instead the client proxy means 11 executes the request on behalf of the client data processing device 12. Upon detecting a request from the client data processing device, preferably the connection means 16 may determine one of the at least one network servers based on the request, establish the data transmission link 18 between the client proxy means 11 and the proxy server 13 and establish a communication link between the client proxy means 11 and the network server involving the data transmission link.

This may be particularly advantageous in case a direct communication between the client data processing device 12 and the network servers is not possible, e.g. due to access restrictions or similar restricting access to the local servers and/or the local area network 14.

In the following the elements of the access system of Fig. 1 will be described in further detail.

The client data processing device 12 may be a general purpose data processing device, a mobile terminal, such as a mobile computer, a mobile phone, a mobile data organizer or similar. The client data processing device 12 preferably is equipped with communication means for communicating with other data processing devices, e.g., a modem or similar, and communicates with the client proxy means 11 via a connection 111, which may be a communication link via a dedicated line, via a network or similar, including wireless transmission and internal connections, e.g. an internal connection in a data processing device. The connection 111 may be a temporary connection, established on demand upon generation of a request at the client data processing device 12, and may be maintained for further requests. Requests may for example relate to a retrieval of data from the network servers, relate to execution of an application at the network servers or similar.

The client proxy means 11 may be constituted by a dedicated data processing device or may be realized by a code section executed for example at the client data processing device 12. The client proxy means may be located at an arbitrary location, however, it may be preferred to locate the client proxy means in close proximity to the client data processing device, e.g. to ensure short communication paths which may be more easily protected from unauthorized listening.

The client proxy means preferably acts on behalf of the client data processing device in executing at least some of the requests generated at the client data processing device, i.e. the client proxy device may act as a proxy for the client data processing device.

In general, a proxy is an entity which is authorized to act on behalf of another entity, i.e., to execute operations such as communication requests on behalf of the requesting entity. As common in network applications, a proxy receives, e.g., a request for data from a requesting device and retrieves the data on behalf of the requesting device. Since in network applications usually the destination address as well as the originating address is specified, the proxy preferably includes his own address as originating address. Therefore, any requested data will be transmitted back to the proxy. After receiving the requested data the proxy transmits the requested data to the requesting entity, e.g. a data processing device of a user who wishes to access information on a public network such as the Internet.

In the present case the client proxy means 11 may be registered as a proxy at the client data processing device 12 to handle at least some of the requests generated at the client data processing device 12, or the client data processing device 12 may be configured by other means to transmit at least some requests to the client proxy means 11. The client proxy means after receiving a request from the client data processing device 12, retrieves the requested data and then transmits the requested data to the client data processing device.

The connection means 16 is responsible for establishing the required connection between the client proxy means and the appropriate network server. The connection means 16 may be a dedicated data processing device connectable to the client proxy means 11 or may be constituted by a code section executed at a data processing device such as the client proxy means 11 and/or the client data processing device 12 or similar.

In particular, upon reception of a request from the client data processing device 12 at the client proxy means 11, the connection means 16 may select at least one of the network servers for serving the request. The selection may for example be based on information included into the request, an identifier transmitted in association with the request and/or a particular service or service type requested in connection with the request. For facilitating a selection, the connection means 16 may maintain for example information on services available at the network servers and/or address information of the network servers.

The selected network server may also be responsible for further routing the request, i.e. act as a gateway or proxy for further distributing the request to further network servers. Particularly in case for example a plurality of network servers is available for serving a particular type of request, the selected network server may act as a gateway or proxy for further distributing the request.

The connection means preferably also establishes the data transmission link 18 between the client proxy means 11 and the proxy server 13, e.g., via a network such as the Internet and/or via a dedicated communication line including wireless transmissions. The data transmission link 18 may be referred to as a "tunnel", as it may pass or tunnel elements restricting access to the local area network 14, such as firewalls etc., and may be used to establish a secure connection through a publicly accessible network, as outlined with respect to further embodiments. Establishing the data transmission link 18 may involve contacting the proxy server 13 and the client proxy means 11 and negotiating a communication protocol between these two devices, for example involving a particular method of exchanging data and/or security measures. The data transmission link 18 may be established on demand, e.g. upon request from the client proxy means 11, in case the client proxy means 11 receives a request for data from the client data processing device 12, or may be established once at system set-up and then may be maintained throughout operation time. The data transmission link 18 may accommodate a plurality of communication links between at least one client and at least one network server.

Still further, the connection means 16 preferably establishes a connection between the client proxy means and the selected network server involving the data transmission link 18. This preferably includes instructing the proxy server to connect to the selected network server. Thus, the communication link will use a transmission path from the client proxy means 11 through the proxy server 13 to the selected network server. The partition of the communication link between the client proxy means and the proxy server will thus use the transmission link 18 as transmission medium or carrier. The partition of the communication link from the proxy server to the selected network server may be a connection as common in network applications involving packet switched communication or any other connection and may be established on demand through the client proxy means 11 upon reception of a request, but may be maintained for further connections involving the same client and the same network server and e.g. the same type of request.

The connection means 16 may be realized as one or more dedicated data processing devices or by code sections executed at e.g. the client proxy means and/or the client data processing device.

The proxy server 13 may be a data processing device, for example a data processing device with large capacity for serving a large number of client requests. The proxy server 13 may act as a proxy, i.e. executes requests on behalf of another entity, in the present case for example upon request of the client proxy means 11. The proxy server 13 is connectable to the network servers 151, 152 and 153, as illustrated by an arrow 141. The connections may be temporary connections, established e.g. on demand upon generation of a request at the client data processing device 12, but may also be maintained for further requests.

The network servers 151, 152 and 153 may for example be data servers having large capacity for serving a large number of client requests and/or for storing large amounts of data. Even though only three network servers are shown, it is understood that an arbitrary number of network servers may be provided inside and outside the local area network 14. The proxy server 13 and the network servers 151, 152 and 153 are shown to be connected via the local area network 14, however, it is also possible that the proxy server and the network servers are connected via dedicated communication lines or via a wide area network such as the Internet or a combination of networks. Finally, it is possible that some of the network servers are part of the local area network 14, while other network servers are part of other networks while being accessible through the proxy server 13.

The access system of the shown embodiment provides improved access for, e.g. a user operating the client data processing device 12, to information on the network servers 151, 152 and 153, even if direct access to network servers is not possible due to access restrictions at the local area network. Access may be obtained from the client data processing device 12 through the client proxy means 11 and the proxy server 13, e.g. for requesting services from the network servers such as obtaining data files, starting applications and similar.

In the following a further embodiment of the invention will be described with respect to Fig. 2. Fig. 2 shows a flow diagram of a sequence of steps of the method according to another embodiment of the invention.

As the previous embodiment, the steps outlined with respect to this embodiment allow improved access to a local area network from a client data processing device by employing a client proxy means, a proxy server and connection means.

In a first step S21 a request from a client data processing device is received at the client proxy means 11. The request may for example be a request for data, or a request for a particular service, such as the execution of an application program or similar. As an example, a user operating the client data processing device could generate a request concerning the display of a particular document at the client data processing device. This request could be for example generated by entering a particular network address specifying a storage location of the requested document at the client data processing device or by clicking onto a correspondingly marked area on a display associated with the client data processing device 12 or could be generated by clicking onto an icon on a display associated with the client data processing device. The request may contain information on a requested document and/or service and may contain information on the client data processing device originating the request and similar.

In a step S22 for example the connection means 16 establishes a data transmission link or "tunnel" between the client proxy means 11 and proxy server 13. This may involve sending a connection request to the proxy server 13, negotiating communication protocols, encryption methods, and similar.

In a step S23 for example the connection means 16 may determine one of the at least one network servers based on the request from the client data processing device 12. For example, information on the desired network server may be included into the request and/or the desired network server may be determined based on an identifier transmitted in association with the message and/or may be determined based on a type of request received at the client proxy means 11. For example, in case the request from the client data processing device 12 includes a request concerning e-mail services, e.g. the connection means 16 determines a network server providing e-mail services. In case the request from the client data processing device 12 includes a request concerning a html (hyper text markup language) document, the connection means 16 may determine a network server providing http (hyper text transport protocol) services. As common in network applications, the selected network server may also be a gateway or proxy for further distributing the request.

The client proxy means may maintain information on the available network servers and services provided by the network servers.

After an appropriate one of the network servers is determined based on the request, in a step S24 a communication link between the client proxy means and the network server is established via the data transmission link previously established between the client proxy means and the proxy server. The communication link may be a communication link as common in network applications involving packet switched transmissions and may therefore be a point to point bi-directional connection. The communication link between the client proxy means and the network server may be established only for serving a single request or may be maintained after serving the request for further requests, e.g. with similar contents.

Thereafter, in a step S25 the request is served by the network server. Service may include retrieving data from the network server through the proxy server based on the request and transmitting the data to the client data processing device or may include executing an application at the network server under control of the client data processing device 12. This may involve a bi-directional communication between the network server and the client data processing device 12 via the established communication link, e.g. for interactively controlling the execution of an application at the network server via the client data processing device 12, e.g., for scrolling through a document or for editing purposes or for displaying parts of image data such as a bitmap. Serving the request may also include a bitmap protocol or X Windows protocol or similar.

Serving the request may also include further distribution of the request to further network servers.

It is noted that the sequence of steps outlined above may be altered, in particular step S22 may generally be executed at any time, for example before step S21 or after step S23.

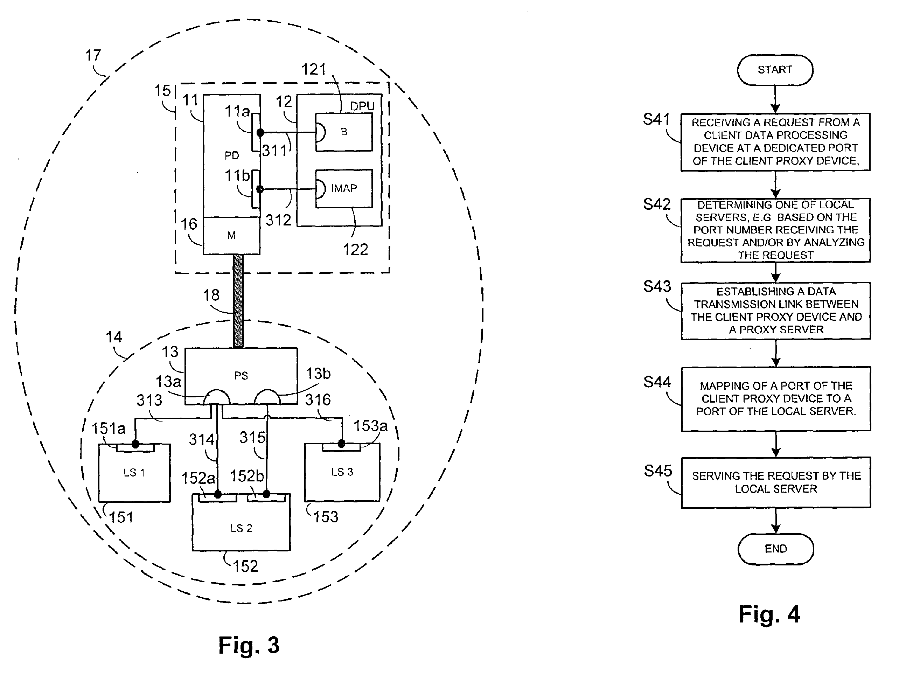

In the following a further embodiment of the invention will be described with respect to Fig. 3. Fig. 3 shows a block diagram of an access system for enabling access to a local area network according to another embodiment of the invention.

Further to the elements of Fig. 1, Fig. 3 shows a browser 121 and an IMAP (Internet message access protocol) application 122 running at the client data processing device 12. The client data processing device 12, the client proxy means 11 and the connection means 16 are arranged at a client side 15, e.g., located at a user wishing to access services provided by the system.

In the present embodiment the client data processing device 12 does again not directly access a desired one of the network servers, instead the client proxy means 11 and the connection means 16 execute the request on behalf of the client data processing device 12 by determining one of the at least one network servers based on the request, establishing the data transmission link 18 between the client proxy means 11 and the proxy server 13 and by establishing a communication link between the client proxy means 11 and the network server involving the data transmission link.

The browser 121 is connectable via a connection 311 to a port 11a of the client proxy means 11 and the email application 122 is connectable via a connection 312 to a port 11b of the client proxy means 11. Further, network servers 151, 152 and 153 are shown having ports 151a, 152a, 152b and 153a, respectively, for receiving data from the proxy server via connections 313, 314, 315 and 316. The ports may, e.g. receive packets of data. The connections 311 - 316 may be temporary connections, established on demand upon generation of a request, but may be maintained operable for further requests. Further, the connections 311 - 316 preferably allow a bi-directional communication, i.e. data can be transmitted in both directions via a connection once it is established.

The elements at the client side 15 and the local area network 14 are shown as part of a wide area network 17, such as a public network, for example the Internet or any other network.

The client data processing device 12 may run application programs generating requests for data or messages, for example the browser 121 for browsing information or transmitting data in data communication networks. Generally, a browser may be constituted by a piece of software which, when run at a client, allows a user to browse through a set of data, i.e., a browser is a program that may serve as a front end to a network such as the World Wide Web on the Internet. In this case, a user may enter an address of a web site into a browser's location field and a corresponding home page will be downloaded for local display. Further, the user may enter the address and name of a particular document, in which case the document will be downloaded for display. The downloaded information may, if visualized, serve as an index to other pages on the web site which can be accessed by clicking on for example a "click here" message, high-lighted text or an icon on the screen.

Further, the client data processing device 12 may run an application program as for example the IMAP application 122, e.g. a mail processing application for sending, receiving and handling of e-mail documents remotely on one of the network servers.

Further applications requiring access to the network servers may be provided, such as applications for remotely controlling the execution of application programs at a local server.

In the present case the client proxy means 11 handles requests generated at the client data processing device 12. Thus, requests, e.g. generated by the browser 121, will be sent to the client proxy means 11 for execution. It is possible that all requests generated at the client data processing device 12 are transmitted to the client proxy means for further handling. However, it is also possible that only selected requests are sent to the client proxy means 11, e.g. requests of a particular type or generated by a particular application at the client data processing device 12. In this case requests which are not transmitted to the client proxy means 11 may be directly executed at the client data processing device 12, i.e. these requests may be directly transmitted over a network such as the Internet, as known in the art.

The client data processing device 12 and the client proxy means 11 in Fig. 3 are illustrated as separate entities and it is to be assured that requests are transmitted from the client data processing device to the client proxy device. Therefore at the client side 15 means may be provided for registering the client proxy means as a proxy at the client data processing device in case the client data processing device executes an application, e.g. browser 121 and/or IMAP application 122, that is proxy-enabled. This assures that the requests from the client data processing device are sent to the client proxy means. Registering the client proxy means as a proxy may be accomplished for example by entering a network address of the client proxy means at the client data processing device. For example, applications that are proxy-enabled may provide an option to register another device as proxy by entering a network address into a specified location on a display. A proxy-enabled browser may thus provide means for entering an IP-address and a port number for a specific service, i.e. communication type requested. Entering the IP-address and the corresponding port number at the client, e.g. at the client browser or the mail processing system, effects that all requests from the respective applications at the client data processing device are transmitted to the corresponding port at the client proxy means. In case of an http-request, e.g. from browser 121 of the client data processing device 12, will be transmitted to port 80 of the processing device, e.g. port 11a. Also, any IMAP request from the IMAP application 122 will therefore preferably be sent to the processing device to port number 143, i.e. port 11b.

In case an application is not proxy-enabled, the application does not provide means for registering a proxy, such as the client proxy means 11, and therefore in case an application which is not proxy-enabled is executed at the client data processing device, e.g. a non proxy-enabled browser and/or a non proxy-enabled IMAP application, the name of a network server is replaced by the name of the client proxy means and the appropriate port. This may be accomplished by a software program run at the client data processing device and will effect that requests of an application to the network servers 151, 152 or 153, will only be sent to the client proxy means 11.

The client data processing device 12, i.e. the browser 121 and the mail processing application 122 are connected to the client proxy means 11 via connection 311 for exchanging data. The connections 311, 312 between the client proxy means 11 and the data processing device 12 may be a standard packet-switched connection or any other connection for exchanging data. In case of packet-switched connections, as shown in Fig. 1, the connection 311 will have a starting point at the client data processing device 12 and an ending point or port at the client proxy means 11. In the shown example the communication path 311 from the browser 121 ends at a port 11a at the client proxy means 11, and the connection 312 from the IMAP application ends at port 11b at the client proxy means 11.

As common in networks, e.g., in packet oriented networks, each connection is characterized by an origin and a communication end point. Each communication end point is constituted by a port having a specific predetermined number and a receiver address, i.e. the address of a particular machine. For each communication type a specific port is provided. Common port numbers for standard communication types are port number 80 for http (hyper text transport protocol), port number 21 for ftp (file transfer protocol), port number 25 for SMTP (Simple Mail Transfer Protocol) and port number 143 for IMAP (Internet Message Access Protocol).

Data packets are routed from the originating entity to the communication end point. Therefore, a packet can be routed to a destination using the IP- (Internet Protocol) address of the destination device and an appropriate port number. For example, a selected hyperlink, e.g. selected by clicking on it using a standard browser will be translated into an IP-address and a port number using a domain name system (DNS). If for example a browser connectable to a network such as the Internet attempts to retrieve an html document from the Internet, the corresponding data providing device storing the requested document will be addressed using its IP-address and further, the http-port, i.e. port number 80, will be specified.

In the present embodiment as an example it is assumed that port 11a is arranged to receive http requests from the browser 121, and the port 11b is arranged to receive IMAP requests from the IMAP application 122. In this case communication end point 11a would have a port number 80 and communication end point 11b would have a port number 143. However, in other examples any other configurations are possible, e.g., multiple communication paths from an application etc..

Further, Fig. 3 shows a proxy server 13 for exchanging data with the client proxy means 11 over a communication link 18 and for exchanging data with the network servers, for example as outlined with respect to the previous embodiments. Any communication between the proxy server 13 and the network servers 151, 152 and 153 may for example be realized via the local area network 14 involving packet switched transmission, however, any other communication type may be employed as well, including dedicated communication lines and wireless transmissions.

The proxy server 13 may also be constituted by a dedicated data processing device, or may be constituted by an application program executed on a data processing device at the same time used for other purposes.

The proxy server 13 includes communication starting points 13a and 13b, e.g., for handling requests of a certain type. In the present case it is for example assumed that starting point 13a is responsible for http requests and that starting point 13b is responsible for IMAP application requests. However this is an example for illustration purposes, for example only one starting point for handling multiple types of request may be provided instead.

The connection 313 between the proxy server 13 and the network server 151 starts at the starting point 13a of the proxy server and ends at a port 151a of the local server 151. The connection 314 between the proxy server and the network server 152 runs from the starting point 13a at the proxy server to a port 152a of the local server 152. The connection 315 between the proxy server and the network server 152 runs from the starting point 13b of the proxy server to the port 152b of the network server 152. Still further, connection 316 between the proxy server 13 and the network server 153 runs from starting point 13a of the proxy server to the port 153a of the network server 153.

In the present case it is for example assumed that the ports 151a and 152a and 153a are ports responsible for handling http requests, for example for communicating with the browser 121 at the client data processing device 12. Further, in the present case it is for example assumed that port 152b is a port responsible for handling IMAP requests, for example for communicating with the IMAP application 122 at the client data processing device 12. Thus ports 151a and 152a and 153a could be ports corresponding to port 11a at the client proxy device 11, and port 152b of local server 152 could correspond to port 11b of the client proxy device 11.

In the example of Fig. 3 network servers 151 and 153 only include one port, in the example for handling HTTP requests, whereas network server 152 shows two ports, in the example port 152a for handling HTTP requests and port 152b for handling IMAP map requests from. However, this is an example only, the network servers may have any number of ports and further types of ports than the two depicted, for HTTP and IMAP may be provided, for example for FTP, SMTP, Gopher, etc. Correspondingly, the data processing device 12 may execute further application programs, for example for FTP, SMTP or Gofer.

The connection means 16 at the client side 15 may be responsible for establishing a data transmission link 18 between the client proxy means and the proxy server 13 and/or selecting a network server and/or establishing the communication link between the proxy server and the selected network server. Information, e.g., network servers, services, client identities, on communication protocols, encryption methods, interfaces in the transmission path and similar may be maintained in a memory accessible by the connection means 16.

For establishing a data transmission link 18 between the client proxy means and the proxy server 13 the connection means may contact the proxy server with a connection request. Thereafter a communication protocol may be negotiated including encryption methods and similar. Preferably the client proxy means 11 maintains information on the configuration of the proxy server 13 in order to appropriately contact the proxy server.

The communication link 18 may include transmissions through a wide area network 17, for example a public network such as the Internet or may be accomplished by any other network or a dedicated communication line, including wireless transmissions. The data transmission link 18 is suited to accommodate a plurality of communication links from the client side 15 to the local area network 14.

The connection means 16 further selects at least one of the network servers 151, 152 and 153 based on the request received at the client proxy means 11 from the client data processing device 12. Further, the connection means may select a port at the selected network server. To facilitate a selection, the connection means 16 may maintain information on the local area network 14, in order to be able to select appropriate network servers.

This may include information on at least one of the group consisting of
- network servers available,
- services available on the network servers, i.e. port numbers,
- identifiers of users authorized for access.

The information on the available network servers of the local area network 14 and/or services and/or users may be maintained in a database at the client side 15 or any other location. Further, this information could for example be retrieved from the local area network 14 before serving a request or could be transferred before starting an access session.

The selection of one of the network servers and/or a port at one of the network servers may be based on a type of request received. For example, if a request is received from the IMAP application 122 at port 11b at the client proxy means 11, the connection means 16 may select an e-mail port on a server at the local area network 14, for example port 152b at network server 152 for serving the request. This selection may be based on information maintained at the connection means 16 on available network servers and/or services available at the network servers.

If for example a request for an html document is received at port 11a of the client proxy means 11 from the browser 121, the connection means 16 may select a corresponding port one of the network servers providing HTTP services, such as for example ports 151a, 152a, 153a of network servers 151, 152 and 153.

In case a plurality of network servers is available for serving the request, the connection means 16 may select one of the available network servers based on information maintained at the connection means 16, which act as a gateway or proxy for the corresponding type of request and may then distribute the request based further information included in the request, e.g. an URL of a particular document desired, as known in the art.

Further, it is possible to transmit this request to a dedicated site at the local area network 14 for analyzing the request and handling further distribution of the request to an appropriate network server, e.g., based on a URL contained in the request and/or a further identifier contained in the request such as a user identifier. Thus the connection means may only maintain information on one responsible network server (i.e. dedicated site) for each type of request. It is also possible that the proxy server 13 analyzes the request and further distributes the request to an appropriate network server.

Further, the selection may be based on a network server identifier transmitted with the request, for example in case an application generating the request is configured to communicate with a predetermined network server.

The selection may also be based on a data type requested. If for example a html document is desired, a http server could be selected. The selection may also be based on an application requested or on the identity of a user.

The connection means 16 may directly analyze the request from the client data processing device 12, in order to determine an appropriate network server for handling the request. A network server could be directly specified in the request or could be derivable from the request.

For example, in case the request contains information such as a URL of a particular document or an identifier of a particular e-mail account, the connection means could base the selection of the network server on this information.

In brief, the selection of a network server may be based on at least one of the group consisting of
- a type of request,
- a network server identifier transmitted with the request,
- a port number of a port at the client proxy means receiving the request,
- a data type requested,
- an application requested.

Further, the connection means 16 is preferably responsible for establishing communication links between the client proxy means 11 and an appropriate one of the network servers 151, 152 and 153. The communication link between the client proxy means 11 and the local server will be established through the data transmission link 18 provided between the client proxy means 11 and the proxy server 13. This may involve mapping, i.e. assigning at least one port of the client proxy device 11 to at least one port of the network servers, possibly in multiple steps. Preferably in a first step a port of the client proxy means 11 may be mapped to a port of the proxy server 13. In a second step the port of the proxy server 13 may be mapped to a port of the selected local server. This may include instructing the proxy server 13 to perform the required assignment with a mapping message from the connection means 16. The connection means may further authorize the selected network server to serve the request.

In order to establish the communication link the connection means may include sub-connection means for mapping at least one port of at least one of the network servers 151, 152 and 153 to at least one port of the client proxy means 13. The sub-connection means may be located at the client proxy means and/or at the proxy server. For example, port 11a of the client proxy means for receiving e.g. http-requests from the browser 121, may be mapped to port 151a of the network server 151 and/or port 152a of the network server 152, assuming that ports 151a and 152a are http ports. The other ports may be mapped similarly. It is noted that this is an example only, further ports at the network servers or at further network servers may be provided.

The connection means may also comprise a further sub-connection means for mapping at least one port of the proxy server 13 to at least one port of the client proxy means 11.

The information on establishing the data transmission link 18 between the client proxy means 11 and the proxy server 13, and the information for facilitating a selection of one of the available network servers at the local area network 14 and establishing the communication link between the client proxy means 11 and the selected local server could also be stored in a memory as mapping rules which are retrieved by the connection means 16 upon receiving a request at the client data processing means 11.

Thus, the connection means may be arranged to select one of the network servers and to retrieve corresponding mapping rules, for example including information on establishing a secure transmission link to the destination proxy server. This may include information on configuring the client proxy means and/or the proxy server in accordance with the request received, in establishing the transmission link to the proxy server based on the transmission medium to be used, e.g. a public network, and the specific configuration of the proxy server of the local area network 14. Therefore, the rules may include information on the type of transmission link to be established to the proxy server 13, and/or the communication type requested, and/or the required configuration of the client proxy means 11, the configuration of the proxy server 13 and similar.

This may be particularly important in case a plurality of proxy servers and/or a plurality of local area networks is provided and connections to different proxy servers may be requested at the client data processing device, e.g., in case a plurality of local area networks such as local area network 14 are provided or in case the local area network comprises a plurality of proxy servers.

In the embodiment shown in Fig. 3, the browser 121 sends a request, e.g. an http request to the client proxy means 11, which on behalf of the browser 121 handles all requests. In other words, the browser 121 will only interact with the client proxy means 11 and need not be aware of any further communications between the client proxy means 11 and further components of the access system. Thus, the client data processing device can interact with the network servers 151, 152 and 153 through the client proxy means 11 and will be virtually part of the local area network 14, even though it may be located remote from the local area network 14 and therefore a virtual private network will be established including the local area network 14 and the client data processing device 12.

The mapping of the communication link may follow predetermined rules, which may, e.g. be determined by the characteristics of the local area network, the required communication link, including security aspects. Connection means and client proxy means may be part of an access unit. Thus, a user operating the client may be enabled to access the local area network by sending requests from the client data processing device 12 to the client proxy means 11, establishing a data transmission link between the client proxy means 11 and the proxy server 13, mapping ports of the client proxy means 11a, 11b to ports of the at least one network server 151a, 152a, 152b, 153a, and retrieving data from the at least one network server 151, 152, 153 of the local area network 14 through the proxy server 13 based on the requests and transmitting the data to the client data processing device 12.

A computer readable medium may be provided, having a program recorded thereon, where the program is to make a computer or system of data processing devices execute functions of the client proxy means and/or the connection means. The computer program may also be distributed between the client and the local area network, e.g. the proxy server. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

Still further, the proxy server 13 may be configured to allow access to only selected services, or selected network servers. Restricted access may be predetermined at the proxy server for all accesses or may depend on the mapping rules retrieved by the connection means at the client side. Access restrictions may be necessary to enhance security of a network. For example, the proxy server could be instructed to only allow certain services which are not security-sensitive.

It is noted that even though requests in the embodiment described emanate from the client side, any connection established may preferably be bi-directional allowing a data transmission and/or sending of requests from the network server to the data processing device 12.

Normally, a client data processing device, i.e. a user operating the client data processing device, will have to be authorized at the local area network in order to be granted access to the network servers, i.e. to obtain the requested service. This may involve an authorization procedure including entering a user password at, e.g., the proxy server. However, since a secure data transmission between the client proxy device and the proxy server may be established, it is also possible that an authorization procedure for accessing the local area network is performed locally at the client data processing device, i.e., the user enters a password for an authorization procedure at the client.

The access system of the shown embodiment provides improved access from the client data processing device 12 to information on the network servers 151, 152 and 153, even if direct access to network servers is not possible due to access restrictions at the local area network. Access may be obtained from the client data processing device 12 through the client proxy means 11 and the proxy server 13, e.g. for requesting services from the network servers such as obtaining data files, starting applications and similar. By providing for a mapping of appropriate ports of the client proxy means to ports of the network servers, a user at the client may have a virtual direct access to services provided at the network servers.

In the following a further embodiment of the invention will be described with respect to Fig. 4. Fig. 4 shows a flow diagram illustrating steps of the method according to another embodiment of the invention.

The method according to this embodiment provides improved access to information available on network servers through use of a client proxy means and a proxy server and a mapping of ports, e.g. for requesting services from the network servers such as obtaining data files, starting applications and similar.

In a first step S41 a request from a client data processing device or an application program operated on the data processing device is received at a port of the client proxy means. For example, a HTTP request would be received at port no. 80, an IMAP request would be received at a port no. 143, as outlined above. The request may include a request for data or may include instructions for execution of an application at one of the network servers or similar. The request may be transmitted from the client data processing device to the client proxy means by specifying the address of the client proxy means and a port number corresponding to the type of the request, however, it is also possible that the request is transmitted to the client proxy means via an internal connection, e.g. in case the client proxy means and the client data processing device are located in a single device.

Thereafter, in a step S42 at least one appropriate network server for serving the request is determined for example by connection means. The determination may for example be based on the port number of the port receiving the request at the client proxy means. In this case, for example a HTTP request would be received at port number 80 at the client proxy means and therefore it is known that the request concerns an HTTP request. Since preferably information on the servers available at the local area network 14 is maintained at the client proxy means, an appropriate one of the network servers may be determined, as outlined before.

Further, the appropriate network server may be determined by analyzing the request, e.g. a network server identifier or URL contained in the request or similar.

This may be particularly advantageous in a case where more than one network is provided at the local area network for serving a particular request type, such as HTTP requests or requests for e-mail applications. In this case by analyzing the request a specific one of the plurality of servers capable of serving the request could be determined.

In a step S43 a data transmission link between the client proxy means and a proxy server is established, for example as outlined before with respect to previous embodiments. The transmission link may be a temporary one, only for serving the received request, or may be established for serving a plurality of requests from the client data processing device 12 and/or optionally other data processing devices.

In a step S44 a specific port of the client proxy means is mapped to a port of a network server. Since in step S42 it was already determined which network server or servers should serve the request from the client data processing device, and thus at least one particular port for serving the request is known, the port receiving the request at the client proxy means may be mapped to a corresponding port of the selected network server. The mapping may be constituted by generating a list of port assignments, i.e. a port of the client proxy means 11, a port of the proxy server 13 and a port of the selected network server.

If it is assumed that network server 151 may act as a gateway or proxy for http requests and further routes these request to a responsible http server, the port 11a of client proxy means 11 could be assigned to a port of the proxy server 13 and to port 151a of the network server 151, if for example an http request is received from browser 121 at port 11a of the client proxy means 11.

The communication link between the client proxy means 11 and the network server is preferably bi-directional and includes the data transmission link established between the client proxy means and the proxy server 13.

The client proxy means 11 and the connection means 16 may hold mapping rules for mapping the ports of the client proxy means to ports of the network servers in data files in a memory. This information preferably includes addresses of available network servers, their ports and/or services provided.

After mapping the ports of the client proxy means and the network server, a communication link between the client proxy means and the network server can be established and a request may be transmitted to the network server.

Therefore, any request from the client data processing device would be routed through the client proxy means 11 and the proxy server 13 to the appropriate network server and any response from the network server would be routed through the proxy server 13 and the client proxy means 11 to the client data processing device 12.

In a step S45 the network server responds to the request from the client data processing device, e.g. by returning data or executing an application. It is also possible that the client data processing device is used to control the execution of an application at the network server.

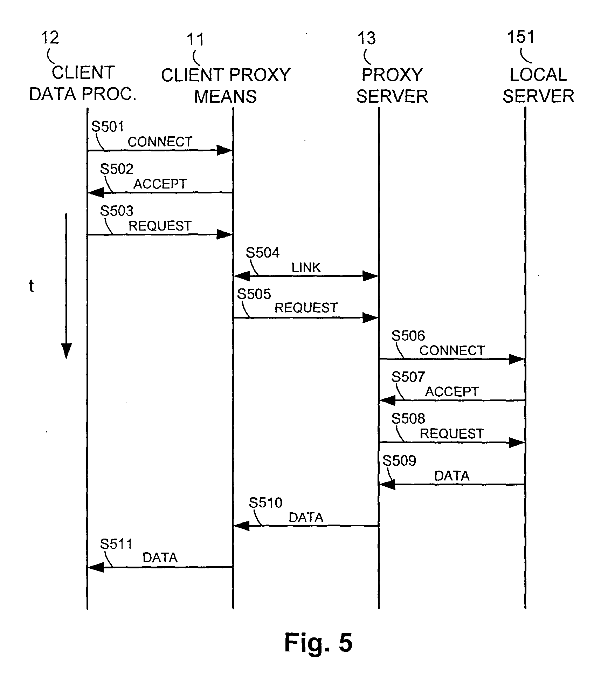

In the following, a further embodiment of the invention will be described with respect to Fig. 5. Fig. 5 shows a flow diagram of a time sequence of steps of the method according to another embodiment of the invention.

Fig. 5 illustrates a message and data flow between the client data processing device 12, the client proxy means 11, the proxy server 13 and network servers 151 as an example for a network server being accessed. As indicated in the figure, time t runs in vertical downward direction.

In a first step S501 a connection request is sent from the client data processing device 12 to the client proxy means 11, requesting a connection. In case of a packet-switched network this may be accomplished as known in the art by a connection request "Connect (socket channel, IP-address, port)". The socket channel is a channel of the client data processing device 12, the IP-address is the Internet protocol address of the client proxy means 11, and the port specifies the requested type of service, e.g. ftp, http, etc., as outlined above.

In response to the connection request, the client proxy means transmits an accept message to the client data processing device 12 in a step S502, also as known in the art by transmitting a message "Accept (master channel, client channel)". The master channel specifies the channel for any request from the client data processing device, the client channel specifies a particular channel, i.e. a socket for use for this particular connection. Even though not shown in Fig. 5, the establishing of a transmission connection between the client data processing device 12 and the client proxy means 11 may also include the command "Bind (channel, local end point)" specifying a channel and a local communication end point, e.g. a port and the command "Listen (channel)" specifying a channel.

After establishing the bi-directional connection between the client data processing device and the client proxy means "read" and "send" commands may be transmitted. Accordingly, in a step S503 the client transmits a request for data to the client proxy means 11, e.g. a request generated at a browser executed at the client side or any mail application or an ftp-application or similar. In the present case, a request may concern a document in the html-format to be retrieved from the local area network. However, it is also possible that a message is scheduled for transmission.

Upon receiving the request, the client proxy means 11 analyses the request, e.g. in order to determine whether a data packet from the local area network 14 is requested. In case a data packet requested is not located in the local area network, the client proxy means may, of course, directly retrieve the requested document, e.g. from a public network such as the Internet. However, in case it is determined that the requested document is to be retrieved from the local area network 14, the client proxy means in this embodiment retrieves mapping rules for establishing a connection to the proxy server 13. These rules, as outlined above, may be based on the request received, the service type requested, the characteristics of local area network 14, of the proxy server 13 and characteristics of the available medium between the client proxy means 11 and the proxy server 13, e.g. information on a public network to be used, including security measures necessary for establishing data integrity and authenticity. The mapping rules may be retrieved either at the client side or may be retrieved from the local area network 14, e.g. a publicly accessible server of the local area network or from any other location. After retrieving the mapping rules, the client proxy means, in a step S504 establishes a transmission link to the proxy server 13, e.g. a tunnel connection providing data authenticity and integrity via a public network.

After establishing the transmission link in a step S505, the client proxy means 11 sends a request to the proxy server 13, corresponding to the request previously received from the client data processing device 12 in step S503. Preferably, the client proxy means will include as an originating address its own address, in order to receive any responses. In this case the client proxy means will save information on any received request from the client data processing device in order to be able to properly route any retrieved data documents back to the client data processing device or browser, respectively.

After receiving the request, the proxy server 13 will analyze the request and based on the information included in the request determine the appropriate network server storing the requested data and the appropriate port number.

Then, in a step S506 the proxy server 13 transmits a "connect" request to the appropriate network server, e.g. similar to the one outlined with respect to step S501. In response thereto, the receiving network server in a step S507 sends an "accept" message, e.g. corresponding to the accept message sent in step S502 from the client proxy means to the client data processing device. Upon establishing the connection between proxy server and network server, the proxy server in a step S508 will transmit a request corresponding to the request received in step S505 from the client proxy means 11 to the determined network server requesting the data requested by the client data processing device.

The network server will transmit the requested data in a step S509 to the proxy server, which will forward the data in a step S510 to client proxy means 11. Client proxy means 11 will then forward the data in step S511 to the client data processing device.

Accordingly, the invention provides a virtual private network for the client data processing device, i.e., a scenario, wherein, through provision of the client proxy means 11, the client data processing device 12 is virtually part of the local area network 14.

It is noted that the client data processing device 12 does not need to have any knowledge about the connection, particularly the transmission link 18 between the client proxy means 11 and the proxy server 13.

Further, according to this embodiment the client proxy means, in accordance with the retrieved rules, may only be provided with information on the transmission link, or tunnel to be established to the proxy server 13. The proxy server 13 may then connect to the appropriate network server as required.

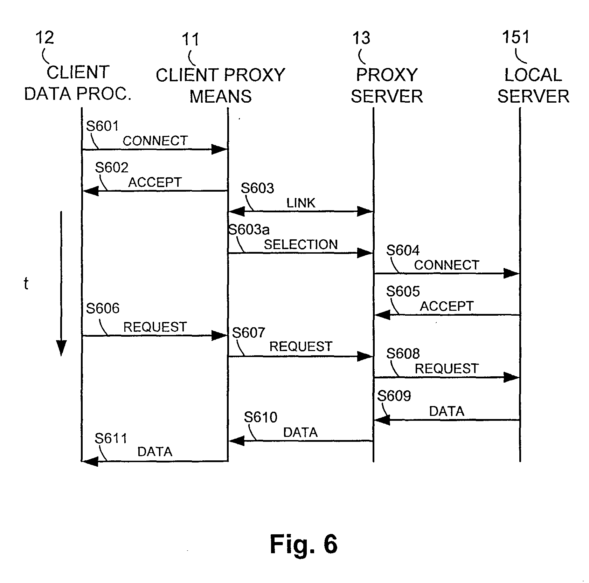

In the following, a further embodiment of the invention will be described with respect to Fig. 6. Fig. 6 shows a flow diagram of a time sequence of steps of the method according to another embodiment of the invention. Fig. 6 is similar to Fig. 5, however, in the embodiment of Fig. 6 first the communication links between the elements of the system are established and only thereafter the request from the client data processing device is routed to the network server for execution.

In a first step S601 a connection request is transmitted from the client data processing device to the client proxy means. In a step S602 an accept message is returned to the client data processing device, resulting in a communication link between the client data processing device and the client proxy means.

In a step S603 a data transmission link is established between the client proxy means and the proxy server, e.g., under control of connection means. Establishing the data transmission link may include negotiating port numbers for data transmission, transmission protocols for data transmission, including encryption and similar. Further, establishing the data transmission link between the client proxy means and the proxy server may include negotiating protocols for a data transmission with further elements in the transmission path.

Preferably the client proxy means 11 then transmits in a step S603a information specifying the selected network server to the proxy server, e.g. via selection message to the proxy server, in order to instruct the proxy server to connect to the selected network server.

Thereafter, in a step S604 the proxy server transmits a connection request to the selected network server determined at the client proxy means.

In a step S605 the network server responds with an accept message to the proxy server and thus a data transmission path between the client data processing device and the network server is established.

Thereafter, in steps S606, S607 and S608 the request from the client data processing device is transmitted to the network server via the client proxy means and the proxy server.

However, it is noted that transmission of the request from the client data processing device to the client proxy means may already be accomplished earlier in time, for example before step S603.

Thereafter, in steps S609, S610 and S611 requested data are transmitted from the network server to the client data processing device. Alternatively, after step S608 an application may be executed at the network server and for example calculation results or data for local display at the client data processing device could be transmitted in steps S609, S610 and S611.

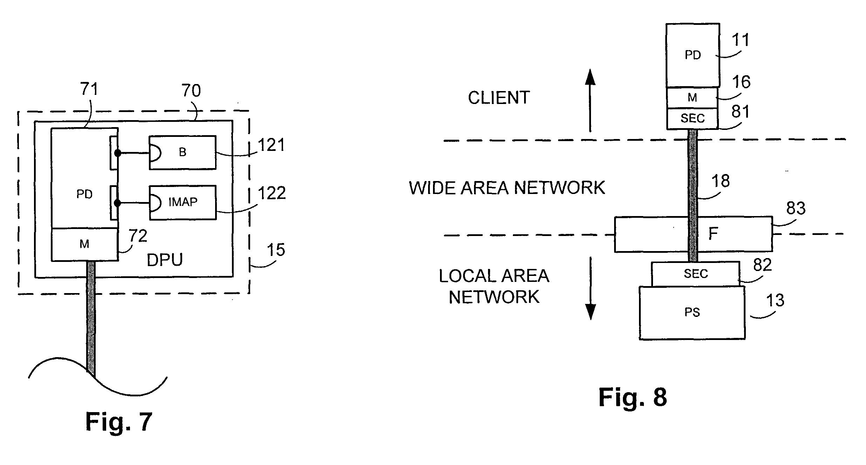

In the following a further embodiment of the invention will be described with respect to Fig. 7. Fig. 7 shows a block diagram illustrating elements of an access system according to another embodiment of the invention particularly illustrating elements at the client side 15.

In Fig. 7 a client data processing device 70 includes a client proxy application 71, a connection application 72, the browser 121 and the IMAP application 122.

The client proxy application 71 may be constituted by a code section containing instructions for executing the functions of the client proxy means 11, e.g. as described with respect to previous embodiments. The client proxy application 71 may be executed at the client data processing device 12 as an application program which may be started by a user at the client data processing device planning to access the local area network 14, e.g. as outlined with respect to previous embodiments.

Further, the connection application 72 may be constituted by a code section containing instructions for executing the functions of the connection means 16, e.g. as outlined with respect to previous embodiments. The connection application 72 may be executed at the client data processing device 12 as an application program which may be started by a user at the client data processing device.

The client proxy application 71 and the connection application 72 may for example be started by clicking on an icon on a display associated with the client data processing device 12.

The applications generating requests, for example the browser 121 and the IMAP application 122, the client proxy application 71 and the connection application 72 may thus be constituted by processes running at the client data processing device 70.

Therefore, providing that requests for the local area network 14, for example from the browser 121 and the IMAP application 122, are transmitted to the client proxy application 71 is different from previous embodiments.

In the present case the client data processing device 70 is preferably registered as a proxy at the client data processing device itself in case a proxy-enabled application is executed. By registering the client data processing device as a proxy, request that from a proxy-enabled application will be routed internally in the client data processing device 70 to the client proxy application 71 for further handling.

Further, in case an application is executed which is not proxy-enabled, e.g. a browser or IMAP application without proxy function, the name of a network server is preferably replaced be the name of the client data processing device and a specific port. By introducing the name of the client data processing device as destination for outgoing requests, requests generated at the client data processing device will be returned to the client data processing device for further handling at the client proxy application 71, i.e. requests will be internally routed to the client proxy application.

Apart from this modification, the embodiment described with respect to Fig. 7 may operate as outlined with respect to previous embodiments.

In the following another embodiment of the invention will be described with respect to Fig. 8. Fig. 8 shows a block diagram of elements of an access system according to another embodiment of the invention including accessing the local area network through a firewall via a secure connection.

Fig. 8 illustrates the client proxy means 11, the connection means 16 and the proxy server 13. Further, Fig. 8 shows security means 81 and 82 for establishing a secure data transmission via the transmission link 18 between the client proxy means 11 and the proxy server 13.

The proxy server 13 and security unit 82 are arranged at the local area network side, the client proxy means 11, connection means 16 and security unit 81 are arranged at the client side. The communication link 18 passes e.g. a wide area network as outlined before. Further, Fig. 8 shows a firewall arrangement 83 restricting access to the local area network from the public network.

The security units 81 and 82 may provide data encryption techniques for assuring data integrity and confidentiality. Standard security functions may be used, however, security functions adapted to the characteristics of the client proxy means and/or the proxy server are employed. The security units 81 and 82 may be constituted by dedicated devices, e.g. realized in hardware or may be constituted by a code section containing instructions for data encryption for providing data confidentiality and data integrity.

Further, the firewall arrangement 83 restricts access to the local area network from the public network. A firewall generally is a method for keeping a network secure. It can for example be implemented in a router that filters out unwanted packets, or it may use a combination of technologies in routers and hosts. Firewalls may be used to give users access to public networks in a secure fashion as well as to separate a company's public Web server from its internal network. They may also be used to keep internal network segments secure. A firewall, as known in the art, may be a packet filter allowing passing of only selected packets, e.g. packets with a specific IP-address and/or a specific port number. Further, firewalls may perform certain processing operations on any packet received from the outside (or inside), before it is transmitted to the local area network side (or to the outside).

Since access to the local area network side is only allowed through the firewall, communication links between a client and a network server, as known in the art, cannot be established. However, the client proxy device and the proxy server may negotiate a communication protocol involving the firewall 83, the data transmission link 18 may pass the firewall 83. The security units 81 and 82 preferably provide the necessary tools for connecting and communicating with the firewall. This may involve steps for contacting the firewall and establishing a communication therewith and instructing the firewall to forward information.

The security tools provided for the security units may be controlled by the connection means 16 and may comprise means for mapping a port of the client proxy means to a port of the firewall 83 and means for instructing a mapping of the port of the firewall to a port of the proxy server. Accordingly, packets may be properly transmitted through the firewall from the client proxy means to the proxy server and vice versa.

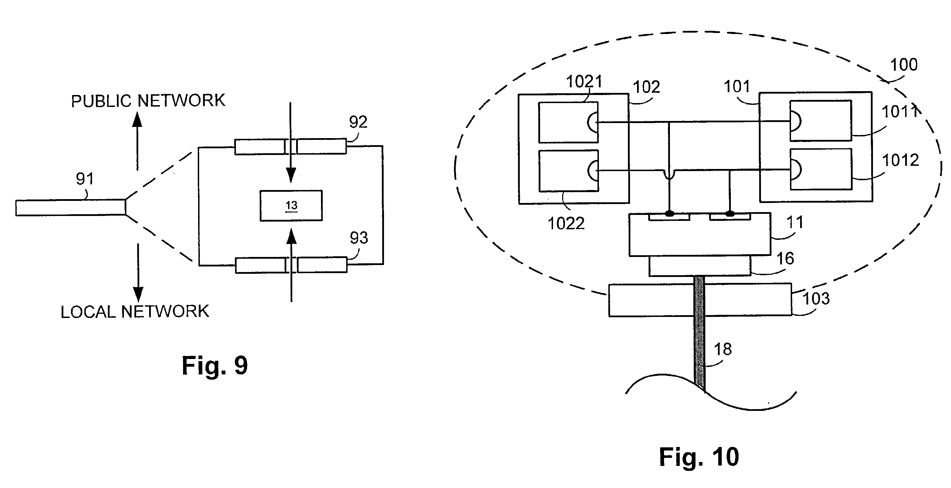

In the following a further embodiment of the invention is described with respect to Fig. 9. Fig. 9 shows a block diagram illustrating elements of an access system according to an embodiment of the invention, particularly illustrating a firewall.

Fig. 9 shows an a firewall 91 and an enlarged view thereof including a first packet filter 92 and a second packet filter 93. The firewall 91 may be arranged between the local area network containing the network servers and the proxy server and the wide area network used by the client data processing device for accessing the local area network, as outlined with respect to previous embodiments.

As shown in Fig. 9, the proxy server 13 is arranged between the packet filters 92 and 93. The proxy server 13 may be accessed, e.g. only via packets provided with a specific address of the proxy server, such as the IP-address in the Internet, as well as a specific port number. Since the proxy server 13 is arranged between the two packet filters of the firewall 91, enhanced security may be achieved since the proxy server is access-restricted from within the local area network and from the public network.

The proxy server 13 is thus arranged in the so-called demilitarized zone DMZ of the firewall and will receive requests from the client through the packet filter 92 and will connect to the network servers 151, 152 and 153 through the second packet filter 93 for retrieving data. In the demilitarized zone of a firewall further components of the network may be located, for example a publicly accessible WWW-server or other components.

In the following a further embodiment of the invention will be described with respect to Fig. 10. Fig. 10 shows elements of the access system according to another embodiment of the invention, particularly illustrating elements at the client side.

Fig. 10 illustrates a client network 100 indicated by a dashed line. The client network may be connected to the local area network 14 through the data transmission link 18, as outlined with respect to previous embodiments.

Inside the client network the client proxy means 11 and connection means 16 are arranged and may operate as for example described with respect previous embodiments. According to Fig. 10 a plurality of client data processing devices may be provided, of which a client data processing device 101 and a client data processing device 102 are illustrated as an example, the client data processing device may run application generating requests for service, as outlined before. In Fig. 10, client data processing device 101 runs applications 1011, 1012 and the client data processing device 102 runs applications 1021, 1022, such as browsers, IMAP applications and similar. Of course, a larger number of applications may be executed, as outlined with respect to previous embodiments. The client data processing devices 101 and 102 are each connected to the client proxy means 11, as outlined before.

The access system according to the shown embodiment may thus connect the client network 100 and the local area network 14 through the data transmission link 18. Accordingly, virtual private network involving the local area network 14 and the client network 100 may be established via proxy means 11 and proxy server 13.

Further, Fig. 10 shows a second firewall 103 restricting access to the client network 100, for example from a publicly accessible packet-switched network. Therefore, both networks may be provided with a firewall for restricting access from the outside and the client proxy means and the connection means, respectively, need to be provided with appropriate tools for passing both firewalls. This may be accomplished, e.g., by connecting to the client network firewall 103 and instructing the client network firewall 103 to contact the local area network firewall 83, and instructing same to contact the proxy server 13 at the local area network. The tools for passing the firewall, i.e. for mapping the ports between the client proxy means 11 and the proxy server 13 may be implemented in software and may be retrieved with the mapping rules, as outlined above.

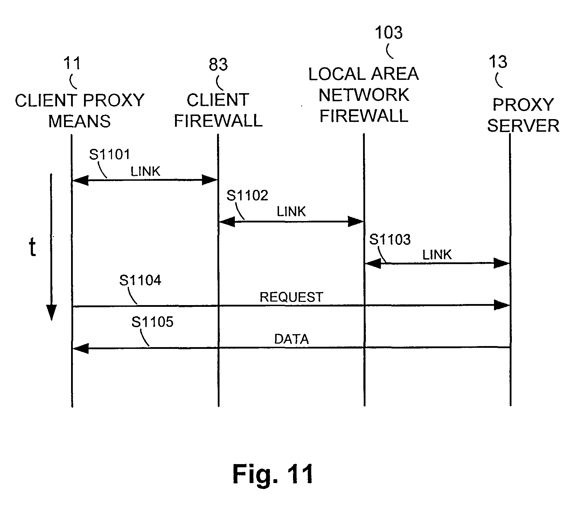

In the following a further embodiment of the invention will be described with respect to Fig. 11. Fig. 11 shows a flow diagram of a time sequence of steps performed in the method according to an embodiment of the invention in case a firewall restricts access to the local area networks.

Fig. 11 shows messages and data exchanged between the client proxy means 11, the client firewall 83, the local area network firewall 103 and the proxy server 13. Time is denoted in downward vertical direction.

It is assumed that the client proxy means 11 received a request from the client data processing device.

In order to serve the request, in a first step S1101 the client proxy means 11 may establish a data transmission link to the firewall 83 at the client side. A communication protocol depending on characteristics of the firewall and the client proxy means may be negotiated.

In a step S1102 the client proxy means 11 may instruct the client firewall 83 to contact the firewall 103 of the local area network in order to establish a data transmission link between the client firewall 83 and the local area network firewall 103. A communication protocol depending on characteristics of the client firewall and the local area network firewall may be negotiated.

In a step S1103 the client proxy means 11 may instruct the firewall 103 of the local area network to contact the proxy server 13 in order to establish a data transmission link there between.

The process of establishing the data transmission links in steps S1101, S1102 and S1103 may depend on mapping rules retrieved from a memory at the client proxy means, however, it is also possible that information is available e.g. at the client firewall to contact the local area network firewall and at the local area network firewall to contact the proxy server.

After establishing the link in the three steps between the client proxy means and the proxy server 13, in a step S1104 a communication link between the client proxy means 11 and a selected network server may be established. Then the request received from the client data processing device 13 is forwarded to the proxy server 13. The proxy server 13 may be instructed by the client proxy means or may analyze the request to contact an appropriate network server for retrieving the requested data. After receiving the data the proxy server 13 may transmit in a step S1105 the data to the client proxy means 11, which will then forward the data to the client data processing device 13 for further processing, visualization or similar.

Thus, the invention allows to establish a virtual private network, e.g. through a publicly accessible network to a client side data processing device or to a client side network comprising a plurality of data processing devices. Since the communication link between the proxy means may be secure for providing data authenticity, and integrity, security-sensitive applications may be executed.

## Claims

1. Access system for enabling a user to access a local area network, comprising
a client proxy means (11; 71) adapted to exchange data with a client data processing device (12; 70) and with at least one network server (151, 152, 153) of the local area network (14) through a proxy server (13); and
connection means (16; 72) for establishing a data transmission link (18) between the client proxy means (11; 71) and the proxy server (13), selecting at least one of the network servers (151, 152, 153) based on the request, and establishing a communication link between the client proxy means (11; 71) and the network server involving the data transmission link.

2. Access system according to claim 1, wherein the network server is selected based on a port at the client proxy means (11; 71) receiving the request.

3. Access system according to one of the claims 1 or 2, wherein the network server is determined by information included into the request.

4. Access system according to one of the preceding claims, wherein the communication link between the client proxy means (11; 71) and the network server includes at least one port (11a, 11b) of the client proxy means (11; 71) and at least one port (151a, 152a, 152b, 153a) of the at least one network server.

5. Access system according to one of the preceding claims, wherein the connection means (16; 72) is arranged to generate a list of assignments between at least one port of the client proxy means (11; 71) and at least one port of the at least one network server.

6. Access system according to one of the preceding claims, wherein the connection means is arranged for retrieving corresponding mapping rules, the mapping rules at least including information on establishing the data transmission link (18) between the client proxy means (11; 71) and the proxy server (13).

7. Access system according to one of the preceding claims, wherein the mapping rules further include address information of the at least one network server (151, 152, 153) of the local area network (14).

8. Access system according to one of the claims 6 or 7, wherein the connection means (16; 72) comprises
first sub-connection means for mapping at least one port of the client proxy means (11; 71) to at least one port of the proxy server (13);
second sub-connection means for mapping the at least one port of the proxy server (13) to at least one port of the at least one network server; and
wherein the mapping is in accordance with the retrieved mapping rules.

9. Access system according to one of the preceding claims, wherein the data transmission link (18) between the proxy server (13) and the client proxy means (11; 71) involves a secure communication via a public network.

10. Access system according to one of the preceding claims, comprising means for executing an authorization procedure at the client data processing device (12; 70).

11. Access system according to one of the preceding claims, wherein the data transmission session with the client proxy means (11; 71) is established through a firewall (83; 91; 92, 93) restricting access to the local area network (14) from the outside.

12. Access system according to one of the preceding claims, wherein the connection means (16; 72) comprises means for mapping a port of the client proxy means (11; 71) to a port of the firewall and means for mapping the port of the firewall to a port of the proxy server (13).

13. Access system according to one of the preceding claims, wherein the client data processing device is part of a client network (100) and the data transmission link between the client proxy means and the proxy server is further established through a firewall (103) restricting access to the client network (100) from the outside.

14. Access system according to one of the preceding claims, wherein the proxy server is located inside a firewall restricting access to the local area network from the outside.

15. Access system according to one of the preceding claims, wherein the proxy server is configured to allow access only to selected network servers and services.

16. Access system according to one of the preceding claims, comprising means for registering the client proxy means (11; 71) as a proxy at the client data processing device (11; 71) for executing an application that is proxy enabled.

17. Access system according to one of the preceding claims, comprising means for replacing at the client data processing device (12; 70) the name of a network server by the name of the client proxy means and a specific port for executing an application that is not proxy enabled.

18. Access method for enabling a user to access a local area network including
receiving a request from a client data processing device (12; 70) at a client proxy means (11; 71),
determining one of the at least one network servers (151, 152, 153) based on the request,
establishing a data transmission link (18) between the client proxy means (11; 71) and a proxy server (13),
establishing a communication link between the client proxy means (11; 71) and the network server involving the data transmission link (18), and
authorizing the network server to serve the request.

19. Access method according to claim 18, wherein the network server is selected based on a port of the client proxy means (11; 71) receiving the request.

20. Access method according to one of the claims 18 or 19, wherein the network server is determined by information included into the request.

21. Access method according to one of the claims 18 to 20, wherein establishing the communication link between the client proxy means (11; 71) and the network server (151, 152, 153) includes a mapping of at least one port (11a, 11b) of the client proxy means (11; 71) to at least one port (151a, 152a, 152b, 153a) of the at least one network server.

22. Access method according to one of the claims 18 to 21, wherein the mapping includes generating a list of assignments between the port of the client proxy means (11; 71) and the port of the network server.

23. Access method according to one of the claims 18 to 22, including retrieving mapping rules, the mapping rules at least including information on establishing the data transmission link (18).

24. Access method according to one of the claims 18 to 23, wherein the mapping rules further include address information of the at least one network server (151, 152, 153) of the local area network (14).

25. Access method according to one of the claims 18 - 24, including
mapping at least one port of the client proxy means (11; 71) to at least one port of the proxy server (13);
mapping the at least one port of the proxy server to at least one port of the at least one network server (151, 152, 153); and
wherein the mapping is executed in accordance with the retrieved mapping rules.

26. Access method according to one of the claims 18 - 25, wherein the transmission between the proxy server and the client proxy means involves a secure communication via a public network.

27. Access method according to one of the claims 18 - 26, wherein an authorization procedure for accessing the local area network is performed at the client data processing device (12; 70).

28. Access method according to one of the claims 18 - 27, wherein the data transmission link (18) between the client proxy means (11; 71) and the proxy server (13) is established through a firewall (83; 91; 92, 93) restricting access to the local area network from the outside.

29. Access method according to one of the claims 18 - 28, including mapping a port of the client proxy means to a port of the firewall and mapping the port of the firewall to a port of the proxy server.

30. Access method according to one of the claims 18 - 29, wherein the client data processing device (12; 70) is part of a client network (100) and the data transmission link between the client proxy means (11; 71) and the proxy server (13) is further established through a firewall (103) restricting access to the client network from the outside.

31. Access method according to one of the claims 18 - 30, wherein the proxy server (13) is located inside a firewall (91) restricting access to the local area network (14) from the outside.

32. Access method according to one of the claims 18 - 31, wherein the proxy server (13) is configured to allow access only to selected network servers.

33. Access method according to one of the claims 18 - 32, including registering the client proxy means (11; 71) as a proxy at the client data processing device (12; 70) for executing an application that is proxy enabled.

34. Access method according to one of the claims 18 - 33, including replacing at the client data processing device (12; 70) the name of the at least one network server by the name of the client proxy means (13) and a specific port for executing an application that is not proxy enabled.

35. A computer readable medium, having a program recorded thereon, where the program is to make the computer execute the method according to one of the claims 18 - 34.

36. A computer program product comprising the computer readable medium according to claim 35.

37. Access system for enabling a user to access a local area network, comprising
a client proxy means (11; 71) including a code section containing instructions for exchanging data with a client data processing device (12; 70) and with at least one network server (151, 152, 153) of the local area network (14) through a proxy server (13); and
connection means (16; 72) including code sections containing instructions for establishing a data transmission link (18) between the client proxy means (11; 71) and the proxy server (13), selecting at least one of the network servers (151, 152, 153) based on the request, and establishing a communication link between the client proxy means (11; 71) and the network server involving the data transmission link.

38. Access system according to claim 37, wherein the network server is selected based on a port at the client proxy means (11; 71) receiving the request.

39. Access system according to one of the claims 37 or 38, wherein the network server is determined by information included into the request.

40. Access system according to one of the claims 37 to 39, wherein the communication link between the client proxy means (11; 71) and the network server includes at least one port (11a, 11b) of the client proxy means (11; 71) and at least one port (151a, 152a, 152b, 153a) of the at least one network server.

41. Access system according to one of the claims 37 to 40, wherein the connection means (16; 72) includes a code section containing instructions for generating a list of assignments between at least one port of the client proxy means (11; 71) and at least one port of the at least one network server (151, 152, 153).

42. Access system according to one of the claims 37 to 41, wherein the connection means includes a code section containing instructions for retrieving corresponding mapping rules, the mapping rules at least including information on establishing the data transmission link (18) between the client proxy means (11; 71) and the proxy server (13).

43. Access system according to one of the claims 37 to 42, wherein the mapping rules further include address information of the at least one network server (151, 152, 153) of the local area network (14).

44. Access system according to one of the claims 42 or 43, wherein the connection means (16; 72) comprises
a code section containing instructions for mapping at least one port of the client proxy means (11; 71) to at least one port of the proxy server (13);
a code section containing instructions for mapping the at least one port of the proxy server (13) to at least one port (151a, 152a, 152b, 153a) of the at least one network server; and
wherein the mapping is in accordance with the retrieved mapping rules.

45. Access system according to one of the claims 37 to 44, comprising a code section containing instructions for executing an authorization procedure at the client data processing device (12; 70).

46. Access system according to one of the claims 37 to 45, wherein the data transmission link (18) between the client proxy means (11; 71) and the proxy server (13) is established through a firewall (83; 91; 92, 93) restricting access to the local area network (14) from the outside.

47. Access system according to one of the claims 37 to 46, wherein the connection means (16; 72) includes a code section containing instructions for mapping a port of the client proxy means (11; 71) to a port of the firewall and means for mapping the port of the fire wall to a port of the proxy server (13).

48. Access system according to one of the claims 37 to 47, wherein the client data processing device is part of a client network (100) and the data transmission link (18) between the client proxy means (11; 71) and the proxy server (13) is established through a firewall (103) restricting access to the client network (100) from the outside.

49. Access system according to one of the claims 37 to 48, wherein the proxy server is located inside a firewall restricting access to the local area network from the outside.

50. Access system according to one of the claims 37 to 49, wherein the proxy server includes a code section containing instructions for allowing access only to selected network servers.

51. Access system according to one of the claims 37 to 50, comprising a code section containing instructions for registering the client proxy means (11; 71) as a proxy at the client data processing device (11; 71) for executing an application that is proxy enabled.

52. Access system according to one of the claims 37 to 51, comprising a code section containing instructions for replacing at the client data processing device (12; 70) the name of a network server by the name of the client proxy means and a specific port for executing an application that is not proxy enabled.
